# EUROPÄISCHE PATENTSCHRIFT

(11) **EP 2 804 059 B1**
(45) Veröffentlichungstag und Bekanntmachung des Hinweises auf die Patenterteilung: **12.04.2017**
(21) Anmeldenummer: 14155586.2
(22) Anmeldetag: 18.02.2014
(51) Int. Cl.: G05B 19/414, G05B 19/042

(54) **Verfahren zur Übertragung von Daten zwischen einer Positionsmesseinrichtung und einer zugeordneten Verarbeitungseinheit sowie Positionsmesseinrichtung hierfür**
Method for transferring data between a position measuring device and an associated processing unit and a position measuring device for the same
Procédé de transmission de données entre un dispositif de mesure de position et une unité de traitement associée ainsi que dispositif de mesure de position correspondant

(30) Priorität: 15.05.2013 DE 102013209019
(43) Veröffentlichungstag der Anmeldung: 19.11.2014
(73) Patentinhaber: Dr. Johannes Heidenhain GmbH, 83301 Traunreut (DE)
(72) Erfinder: Beaury, Bernhard, 83236 Übersee (DE); Kobler, Alexander, 84508 Burgkirchen (DE); Kreuzer, Stephan, 83362 Surberg-Ettendorf (DE); Mooshammer, Markus, 83278 Traunstein (DE); Walter, Michael, 84570 Polling (DE)

(56) Entgegenhaltungen:
- EP-A1- 2 017 678
- EP-A1- 2 148 178
- EP-A2- 1 168 120
- DE-A1- 10 050 392
- DE-A1- 10 241 183
- HEIDENHAIN GMBH: "EnDat 2.2 - Bidirectional Interface for Position Encoders", INTERNET CITATION, 30. November 2008 (2008-11-30), Seiten 1-20, XP002659570, Gefunden im Internet: URL:http://www.heidenhain.in/fileadmin/pdb /media/img/383_942-25_EnDat_2-2_en.pdf [gefunden am 2011-09-20]

## Beschreibung

Die Erfindung betrifft ein Verfahren zur Übertragung von Daten zwischen einer Positionsmesseinrichtung und einer zugeordneten Verarbeitungseinheit nach dem Oberbegriff des Anspruchs 1 sowie eine Positionsmesseinrichtung, mit der jenes Verfahren ausgeführt werden kann.

Bei dem genannten Verfahren werden Daten mit einer ersten Priorität (nachfolgend als "erste Daten" bezeichnet) in aufeinander folgenden Zyklen von der Positionsmesseinrichtung zur Verarbeitungseinheit übertragen, wobei zumindest in einem Teil der Zyklen zusätzlich zu den ersten Daten auch Daten einer zweiten, niedrigeren Priorität (nachfolgend als "zweite Daten" bezeichnet) von der Positionsmesseinrichtung zur Verarbeitungseinheit übertragen werden und wobei die Art der in einem jeweiligen Zyklus übertragenen zweiten Daten zwischen den einzelnen Zyklen variieren kann. Dabei werden zur Einleitung eines Zyklus der Datenübertragung jeweils erste Daten durch einen Anforderungsbefehl seitens der Verarbeitungseinheit angefordert.

Bei den ersten Daten mit vergleichsweise hoher Priorität kann es sich insbesondere um Positionsmesswerte handeln, die an der Positionsmesseinrichtung gewonnen wurden und die zur weiteren Verarbeitung und gegebenenfalls Auswertung an die Verarbeitungseinheit übertragen werden sollen. Weiterhin kann es sich bei den ersten Daten um an der Positionsmesseinrichtung gewonnene Geschwindigkeits- oder Beschleunigungswerte handeln. Das heißt, unter einer Positionsmesseinrichtung wird vorliegend nicht nur eine Messeinrichtung verstanden, mit der Positionsmesswerte oder Änderungen von Positionsmesswerten an sich generiert werden, sondern es sollen hierunter auch Messeinrichtungen fallen, mit denen die Zeitabhängigkeit von Positionswerten, insbesondere in Form von Geschwindigkeits- oder Beschleunigungsmesswerten, erfasst wird.

Ferner kann es sich bei der Positionsmesseinrichtung um ein so genanntes Tastsystem handeln, das einen auslenkbaren Taststift aufweist, mit dem sich räumliche Grenzen eines Objektes, auch zeitabhängig, erfassen (ertasten) lassen.

Bei den zweiten Daten mit vergleichsweise niedrigerer Priorität kann es sich einerseits um physikalische Zustandsgrößen handeln, die z.B. für die Ansteuerung der Positionsmesseinrichtung und/oder bei der Verarbeitung und Auswertung der Messwerte mit hoher Priorität von Bedeutung sein können, wie etwa um Temperaturmesswerte sowie gegebenenfalls Geschwindigkeits- oder Beschleunigungswerte (sofern diese nicht als erste Daten mit hoher Priorität behandelt werden), oder andererseits um Zustandsinformationen bezüglich der Positionsmesseinrichtung, wie etwa Diagnoseinformationen, Fehlermeldungen oder Warnhinweise, oder auch um Speicherinhalte.

Um bei einem derartigen Verfahren sicherzustellen, dass die hochprioren ersten Daten, insbesondere in Form von Positions- Geschwindigkeits- oder Beschleunigungsmesswerten, jeweils aktuell an der Verarbeitungseinheit zur Verfügung stehen können, sollte die Dauer der einzelnen Zyklen, in denen jeweils erste Daten an die Verarbeitungseinheit übertragen werden, möglichst kurz sein. Dies bedeutet wiederum, dass in einem jeweiligen Zyklus nicht sämtliche möglicherweise relevanten zweiten Daten mit niedrigerer Priorität an die Verarbeitungseinheit übertragen werden können. Daher ist es bekannt, die zweiten Daten, die der Verarbeitungseinheit zur Verfügung gestellt werden sollen, über mehrere Zyklen verteilt zu übertragen, z. B. in einem Zyklus Temperaturmesswerte und Diagnoseinformationen und in einem anderen Zyklus mögliche Warnhinweise und Fehlermeldungen.

So sind in der EP 0 660 209 B1 ein Verfahren und eine Vorrichtung zur seriellen Datenübertragung zwischen einer Positionsmesseinrichtung und einer Verarbeitungseinheit beschrieben, wonach die Verarbeitungseinheit von der Positionsmesseinrichtung mittels sogenannter Statusbefehle einerseits Positionsmesswerte sowie andererseits Parameterdaten, wie z. B. Warnhinweise, Alarm-Meldungen oder Korrekturwerte, anfordern kann. Im Fall der Anforderung von Parameterdaten dienen die Statusbefehle dabei auch zur Auswahl desjenigen Speicherbereiches der Positionsmesseinrichtung, in welchem die aktuell angeforderte Art von Parameterdaten, also etwa Warnhinweise oder Alarm-Meldungen, abgelegt ist.

Die DE 100 50 392 A1 beschreibt eine Positionsmesseinrichtung, sowie ein Verfahren zu deren Betrieb. In diesem Dokument wird vorgeschlagen, auf Anforderungsbefehle jeweils sowohl einen Positionswert, als auch Diagnosedaten zu übertragen, wobei sich die Inhalte der Diagnosedaten bei aufeinanderfolgenden Anforderungsbefehlen sequentiell ändern.

Die EP 1 168 120 A2 beschreibt ein Verfahren und eine Vorrichtung zur seriellen Datenübertragung zwischen einem Positionsmesssystem und einer Verarbeitungseinheit, bei dem auf einen Positions-Anforderungsbefehl nicht nur zeitkritische Positionsdaten, sondern stets auch zeitunkritische weitere Daten übertragen werden.

Der Erfindung liegt das Problem zugrunde, ein Verfahren und eine Positionsmesseinrichtung der eingangs genannten Art weiter zu vereinfachen.

Dieses Problem wird erfindungsgemäß zum Einen durch die Schaffung eines. Verfahrens zum Übertragen von Daten zwischen einer Positionsmesseinrichtung und einer zugeordneten Verarbeitungseinheit mit den Merkmalen des Anspruchs 1 gelöst.

Danach ist bei einem Verfahren gemäß dem Oberbegriff des Anspruchs 1 weiter vorgesehen, dass in der Positionsmesseinrichtung die erforderlichen Informationen vorgehalten werden, um einem jeweiligen Zyklus, in welchem zweite Daten zur Verarbeitungseinheit übertragen werden sollen, mindestens eine Art zweiter Daten zuzuordnen, also etwa Temperaturmesswerte und/oder Diagnoseinformationen und/oder Warnhinweise etc., und zwar derart, dass eine Zuordnung zweiter Daten zu einzelnen Zyklen ohne Mitwirkung der Verarbeitungseinheit vorgenommen werden kann.

Hierdurch wird die Datenübertragung zwischen Positionsmesseinrichtung und zugehöriger Verarbeitungseinheit entlastet und vereinfacht, da keine speziellen Befehle erforderlich sind, mittels derer die Verarbeitungseinheit jeweils bestimmte zweite Daten (niedriger Priorität) von der Positionsmesseinrichtung anfordern müsste. Stattdessen kann die Positionsmesseinrichtung so konfiguriert werden, dass die zweiten Daten im Betrieb der Positionsmesseinrichtung in definierter Weise bestimmten Zyklen der Datenübertragung von der Positionsmesseinrichtung zur Verarbeitungseinheit zugeordnet werden.

Das erfindungsgemäße Verfahren wird im Rahmen eines sogenannten Anforderungs-Antwort-Schemas der Datenübertragung angewandt, bei dem die aktuell in der Positionsmesseinrichtung gewonnenen Positions-, Geschwindigkeits- oder Beschleunigungsmesswerte jeweils von der Verarbeitungseinheit mittels entsprechender Anforderungsbefehle angefordert werden. Dabei kann ausgelöst durch den jeweiligen Anforderungsbefehl oder durch einen separaten Befehl der Verarbeitungseinheit anhand der in der Positionsmesseinrichtung abgelegten Informationen auch festgelegt werden, ob und gegebenenfalls welche zweite Daten in dem durch den Anforderungsbefehl eingeleiteten Zyklus (von der Positionsmesseinrichtung zur Verarbeitungseinheit) übertragen werden sollen.

Zur Bereitstellung der Informationen, mittels derer bei der Datenübertragung von der Positionsmesseinrichtung zur Verarbeitungseinheit den einzelnen Zyklen jeweils bestimmte (vorgebbare) zweite Daten zugeordnet werden, dienen in der Positionsmesseinrichtung (in einem flüchtigen oder nicht-flüchtigen Speicher) abgelegte, d. h. gespeicherte, Sendelisten. Mittels mindestens einer Sendeliste lässt sich im Betrieb der Positionsmesseinrichtung festlegen, welche Art zweiter Daten in einem jeweiligen Zyklus der Datenübertragung übertragen werden soll. Insbesondere wird ausgelöst durch einen jeweiligen Anforderungsbefehl, der zur Einleitung eines neuen Zyklus der Datenübertragung dient, oder durch einen separaten Befehl der Verarbeitungseinheit anhand einer dem Anforderungsbefehl zugeordneten Sendeliste (in der Positionsmesseinrichtung) festgelegt,

ob und gegebenenfalls welche zweite Daten in dem durch den Anforderungsbefehl eingeleiteten Zyklus übertragen werden sollen.
So definiert eine jeweilige Sendeliste Folgen zweiter Daten, die in einer durch die Sendelisten festgelegten Reihenfolge einzelnen Zyklen der Datenübertragung zugeordnet werden. Konkret können die in der mindestens einen Sendeliste definierten Folgen zweiter Daten angeben, welche Art zweiter Daten als Bestandteil einer jeweiligen Datenfolge (in einem bestimmten Zyklus) von der Positionsmesseinrichtung zur Verarbeitungseinheit übertragen werden soll. So kann eine in einer Sendeliste definierte Datenfolge beispielsweise angeben, dass ein Temperaturmesswert und eine bestimmte Diagnose-Information an die Verarbeitungseinheit übertragen werden sollen, wenn die entsprechende Folge zweiter Daten einem Zyklus der Datenübertragung zugeordnet wurde.

Dabei ist vorgesehen dass die Folgen zweiter Daten in der Positionsmesseinrichtung zu mehreren Sendelisten in Form einer Mehrzahl unterschiedlicher Datenblöcke zusammengefasst sind, welche jeweils mindestens eine Folge zweiter Daten definieren und von denen zumindest ein Teil mehrere Folgen zweiter Daten definiert, wobei durch die Positionsmesseinrichtung in einem gegebenen Zeitabschnitt jeweils Folgen zweiter Daten aus genau einem der Datenblöcke (in einer vorbestimmten Reihenfolge) den einzelnen Zyklen der Datenübertragung zugeordnet werden und wobei für unterschiedliche Zeitabschnitte unterschiedliche

Datenblöcke zur Abarbeitung vorgesehen sein können.

Im Ergebnis definiert eine jeweilige Sendeliste bzw. ein jeweiliger Datenblock eine bestimmte Abfolge, in der die unterschiedlichen Arten zweiter Daten, wie z. B. Temperaturmesswerte, unterschiedliche Statusinformationen usw., den einzelnen Zyklen der Datenübertragung zugeordnet werden. Dabei kann die Positionsmesseinrichtung in einer Variante selbst (z.B. ereignisgetriggert) jeweils denjenigen Datenblock festlegen, aus dem aktuell jeweils Folgen zweiter Daten den einzelnen Zyklen zugeordnet werden. Insbesondere kann aber eine Auswahl einer jeweils abzuarbeitenden Sendeliste bzw. eines Datenblockes durch entsprechende Anforderungsbefehle seitens der Verarbeitungseinheit erfolgen.

Die Sendelisten bzw. Datenblöcke enthalten dabei nicht die zu übertragenden Daten selbst, die ja erst im Betrieb der Positionsmesseinrichtung generiert werden, sondern geben lediglich an, welche Art(en) zweiter Daten den einzelnen Zyklen der Datenübertragung zuzuordnen ist.

Dabei kann, wie weiter oben bereits angegeben, vorgesehen sein, dass die Verarbeitungseinheit bei der Auswahl derjenigen Sendeliste bzw. desjenigen Datenblockes, aus dem die zweiten Daten den einzelnen Zyklen der Datenübertragung zugeordnet werden sollen, mitwirkt, z.B. durch Übersendung eines entsprechenden Befehles, wenn zur Verarbeitung und Auswertung von Daten Informationen benötigt werden, die der Abarbeitung eines bestimmten Datenblockes entsprechen, oder regelmäßig im Rahmen der Anforderungsbefehle, mit denen die einzelnen Zyklen der Datenübertragung eingeleitet werden. D. h., obwohl das Verfahren ohne Mitwirkung der Verarbeitungseinheit bei der Auswahl der jeweils zu übertragenden zweiten Daten ablaufen kann, soll ein Eingreifen der Verarbeitungseinheit hierbei nicht ausgeschlossen werden, etwa um auf aktuelle Ereignisse, wie Fehlermeldungen oder Warnhinweise, angemessen reagieren zu können. Die Sendelisten, welche die Art der zu übertragenden zweiten Daten festlegen, sind dabei aber in der Positionsmesseinrichtung abgelegt.

Weiterhin können Maßnahmen zur Optimierung der Speicherorganisation vorgesehen sein, um mit möglichst geringem Speicherbedarf eine möglichst große Anzahl an Sendelisten bzw. Datenblöcken mit unterschiedlichen Folgen zweiter Daten in der Positionsmesseinrichtung ablegen zu können.

Hierbei kann zum Einen der Umstand ausgenutzt werden, dass sich die zu einem Datenblock zusammengefassten Folgen zweiter Daten nicht zwingend hinsichtlich aller jeweils in einer Datenfolge zu übertragenden Daten unterscheiden müssen, sondern dass durchaus vorgesehen sein kann, eine bestimmte Art zweiter Daten in jeder Datenfolge eines Datenblocks oder zumindest in jeder n-ten Folge zweiter Daten zu übertragen. So könnte etwa vorgesehen sein, mit jeder Folge zweiter Daten eines bestimmten Datenblockes jeweils einen Temperaturwert zu übertragen und/oder mit jeder zweiten Datenfolge eine bestimmte Diagnose-Information zu übertragen. In diesem Fall ist es nicht erforderlich, in jeder einzelnen Folge zweiter Daten ausdrücklich die Übersendung der entsprechenden Art zweiter Daten, wie etwa eines Temperaturmesswertes, vorzusehen. Stattdessen kann vereinbart werden, dass bestimmte Arten zweiter Daten, wie etwa die hier beispielhaft genannten Temperaturmesswerte, periodisch/rollierend allen Folgen zweiter Daten bzw. jeder n-ten Folge zweiter Daten zuzuordnen sind.

Zum Anderen ist es möglich, dass sich einzelne Datenblöcke dadurch voneinander unterscheiden, dass ein Datenblock z.B. sämtliche Folgen zweiter Daten eines anderen Datenblockes enthält, aber noch ergänzt durch weitere Folgen zweiter Daten und/oder durch Erweiterung der Datenfolgen aus dem anderen Datenblock. In diesem Fall ist es nicht erforderlich, für die beiden genannten Datenblöcke jeweils eigenständige Speicherbereiche zu nutzen, sondern es genügt vielmehr, einen der beiden Datenblöcke sowie die Unterschiede zwischen den beiden Datenblöcken zu speichern, was eine erhebliche Reduzierung des Speicherbedarfs bedingt.

Eine Positionsmesseinrichtung, die insbesondere im Rahmen des erfindungsgemäßen Verfahrens zur Datenübertragung eingesetzt werden kann, ist durch die Merkmale des Anspruchs 6

charakterisiert. Weiterbildungen der Positionsmesseinrichtung sind in dem Anspruch 6 abhängigen Anspruch angegeben. Weitere Einzelheiten und Vorteile der Erfindung werden anhand der nachfolgenden Beschreibung von Ausführungsbeispielen anhand der Figuren deutlich werden.

Es zeigen:
- Fig. 1: eine schematische Darstellung eines Systems zur Datenübertragung umfassend eine Positionsmesseinrichtung und eine Verarbeitungseinheit;
- Fig. 2: die Struktur eines beispielhaften Übertragungsprotokolls für die Übertragung von Daten zwischen einer Positionsmesseinrichtung und einer Verarbeitungseinheit;
- Fig. 3: eine Blockstruktur zur Definition von Datenfolgen, die von der Positionsmesseinrichtung zur Verarbeitungseinheit übertragen werden sollen;
- Fig. 4A bis 4C: drei beispielhafte Darstellungen von Datenblöcken aus einer Blockstruktur gemäß Figur 3;
- Fig. 5: ein Beispiel für die Abarbeitung von Sendelisten, die auf einer Blockstruktur gemäß den Fig. 3 und 4A - 4C basieren;
- Fig. 6: eine schematische Darstellung einer platzsparenden Speicherorganisation in der Positionsmesseinrichtung.

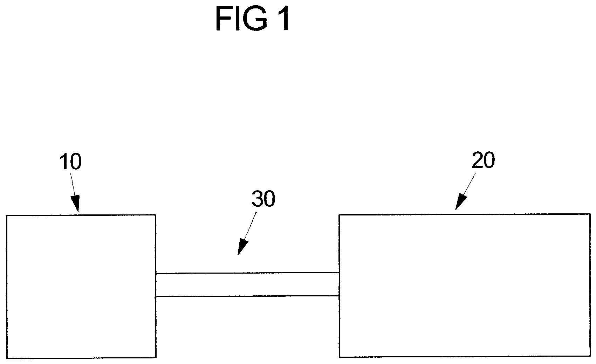

Figur 1 zeigt schematisch eine Positionsmesseinrichtung 10 und eine Verarbeitungseinheit 20, zwischen denen über vorliegend nicht näher spezifizierte Datenleitungen 30 Daten ausgetauscht werden können.

Die Art der von der Positionsmesseinrichtung 10 erzeugten Positionsmesswerte ist dabei vorliegend nicht von Bedeutung. So kann es sich bei der Positionsmesseinrichtung 10 sowohl um eine Längenmesseinrichtung als auch um eine Winkelmesseinrichtung handeln, wobei die jeweiligen Positionsmesswerte durch Abtastung einer Maßverkörperung nach ganz unterschiedlichen physikalischen Prinzipien, wie z. B. fotoelektrischen, magnetischen oder induktiven Messprinzipien, gewonnen werden können. Weiter kann es sich bei den von der Positionsmesseinrichtung gewonnenen Messwerten sowohl um inkrementale Werte handeln, die sich auf eine Relativposition einer Abtasteinheit bezüglich einer Maßverkörperung beziehen, oder auch um absolute Werte, die die absolute Position einer Abtasteinheit bezüglich einer Maßverkörperung angeben.

Bei den von der Positionsmesseinrichtung 10 erzeugten Messwerten muss es sich vorliegend auch nicht zwingend um Positionsmesswerte im engeren Sinne handeln, sondern es kann sich hierbei insbesondere auch um solche Messwerte handeln, welche die zeitliche Abhängigkeit der räumlichen Lage eines Objektes, wie zum Beispiel einer drehbar gelagerten Welle, beschreiben, also insbesondere um Geschwindigkeits- oder Beschleunigungsmesswerte.

Die Positionsmesseinrichtung kann zudem als ein Tastsystem ausgeführt sein, welches mittels eines Taststiftes räumliche Begrenzungen von Objekten erfassen kann, also etwa Objektkanten bzw. Objektoberflächen. Die, gegebenenfalls zeitabhängige, räumliche Lage (Position) der zu bestimmenden Begrenzungen eines Objektes wird dann durch Messwerte repräsentiert, welche Informationen dahingehend enthalten, ob und gegebenenfalls wann der Taststift ausgelenkt wurde.

Die vorstehend beschriebenen Arten von Messwerten werden nachfolgend jeweils einfach als (hochpriore) Messwerte bezeichnet, wobei diese Informationen über die räumliche Lage (Position) eines Objektes und/oder die Zeitabhängigkeit der Position, in Form von Geschwindigkeits- oder Beschleunigungswerten, enthalten.

Von Bedeutung ist vorliegend, dass von der Positionsmesseinrichtung 10 durch Abtastung einer Maßverkörperung mittels einer Abtasteinheit (in irgendeiner Weise) Messwerte gewonnen werden, die zur weiteren Verarbeitung und Auswertung an eine Verarbeitungseinheit 20 zu übertragen sind. Bei der Verarbeitungseinheit 20 kann es sich beispielsweise um eine Maschinensteuerung (NC-Steuerung) handeln, die in Abhängigkeit von den durch die Positionsmesseinrichtung 10 gewonnenen Messwerten eine Werkzeugmaschine steuert. Die Positionsmesseinrichtung 10 kann in diesem Fall insbesondere dazu dienen, die Bewegung zweier zueinander verfahrbarer Bauteile der Werkzeugmaschine, wie etwa die Bewegung eines Schlittens oder einer Welle einer Werkzeugmaschine relativ zu einer feststehenden Baugruppe jener Maschine, zu erfassen.

Im Betrieb der Positionsmesseinrichtung 10 kann es weiterhin erforderlich sein, zusätzlich zu den jeweils aktuell gewonnenen Positions-, Geschwindigkeits- oder Beschleunigungsmesswerten noch weitere Daten an die Verarbeitungseinheit 20 zu übertragen, wie etwa Temperaturmesswerte, sowie Informationen über den Zustand der Positionsmesseinrichtung, einschließlich Alarmsignalen und Warnhinweisen. Dies ist allgemein bekannt; lediglich beispielhaft sei hierfür auf die EP 0 660 209 B1 verwiesen.

Vorliegend kann es sich zum Beispiel bei von der Positionsmesseinrichtung 10 an die Verarbeitungseinheit 20 zu übertragenden Positionsmesswerten um die Daten vergleichsweise hoher Priorität (hochpriore Daten) handeln, die hier als erste Daten bezeichnet werden.

Die weiteren von der Positionsmesseinrichtung 10 an die Verarbeitungseinheit 20 zu übertragenden Daten, wie etwa Temperatur-, Geschwindigkeits- und Beschleunigungswerte sowie Informationen über den Zustand der Positionsmesseinrichtung 10, wären demgegenüber als Daten geringerer Priorität anzusehen; diese werden vorliegend als zweite Daten bezeichnet.

Um die an der Positionsmesseinrichtung 10 jeweils aktuell gewonnenen hochprioren Messwerte für eine hochdynamische Regelung reaktionsschnell an die Verarbeitungseinheit 20 übertragen zu können, sollen die Zyklen, innerhalb derer jeweils die aktuellen Messwerte an die Verarbeitungseinheit 20 übertragen werden, möglichst kurz sein. Es wäre daher nicht zielführend, in einem jeweiligen Zyklus neben den aktuell in der Positionsmesseinrichtung vorliegenden hochprioren Messwerten jeweils noch alle möglicherweise relevanten weiteren, zweiten Daten von der Positionsmesseinrichtung 10 an die Verarbeitungseinheit 20 zu übertragen. Stattdessen werden die zweiten Daten niedrigerer Priorität über mehrere Zyklen verteilt (und jeweils auf die hochprioren Messwerte folgend) von der Positionsmesseinrichtung 10 an die Verarbeitungseinheit 20 übertragen, etwa in einem Zyklus Temperaturmesswerte und bestimmte Warnhinweise, in einem anderen Zyklus Geschwindigkeits- und Beschleunigungswerte, usw.

Hierzu sei für weitere Einzelheiten wiederum auf die EP 0 660 209 B1 verwiesen, wonach aktuell von der Verarbeitungseinheit benötigte weitere Daten (dort als Parameterdaten bezeichnet) jeweils mittels bestimmter Statusbefehle von der Positionsmesseinrichtung angefordert werden.

Vorliegend wird demgegenüber ein System dargestellt und beschrieben, bei welchem für die Übertragung zweiter Daten geringerer Priorität von der Positionsmesseinrichtung 10 zur Verarbeitungseinheit 20, verteilt über die einzelnen Zyklen der Datenübertragung, keine Ansteuerung seitens der Verarbeitungseinheit 20 erforderlich ist, wobei aber dennoch von Zyklus zu Zyklus unterschiedliche zweite Daten von der Positionsmesseinrichtung 10 zur Verarbeitungseinheit 20 übertragen werden können.

Dieses Vorgehen ist dabei sowohl im Rahmen eines sogenannten Anforderungs-Antwort-Schemas und den entsprechenden Protokollen möglich, bei denen aktuelle hochpriore Messwerte jeweils mittels eines Anforderungsbefehles von der Verarbeitungseinheit 20 angefordert werden, als auch bei Nutzung zyklischer Betriebsarten, bei denen die Positionsmesseinrichtung 10 in vorbestimmten zeitlichen Abständen jeweils automatisch (zyklisch) Positionsmesswerte an die Verarbeitungseinheit 20 überträgt, wobei es vorliegend um die erstgenannte Variante geht.

Der in diesem Zusammenhang erforderliche Datenaustausch zwischen der Positionsmesseinrichtung 10 und der Verarbeitungseinheit 20 erfolgt auf den in Figur 1 angedeuteten Datenleitungen 30, die hier rein schematisch zu verstehen sind. Je nach der konkreten Ausgestaltung der Datenübertragung kann es sich hierbei um mehrere unidirektionale Leitungen, um mindestens eine bidirektionale Leitung usw. handeln.

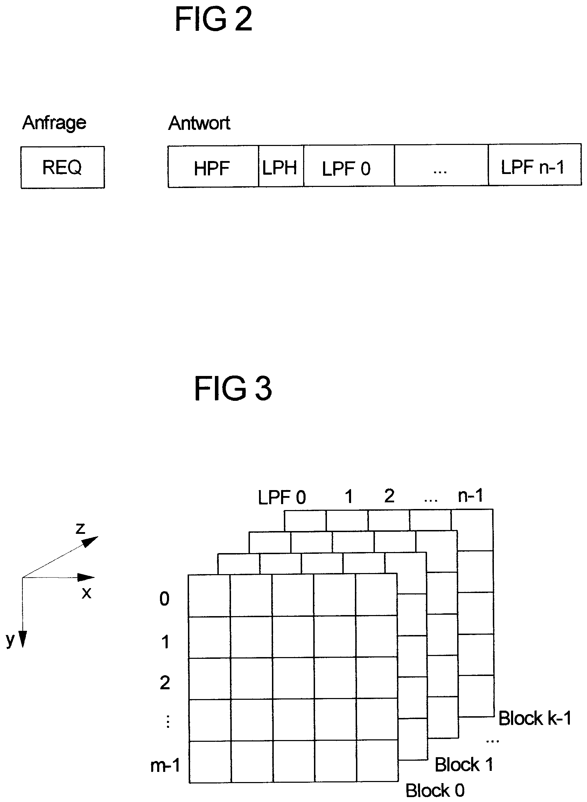

In Figur 2 ist ein mögliches Protokoll für den Datenaustausch zwischen der Positionsmesseinrichtung 10 und der Verarbeitungseinheit 20 beschrieben, und zwar im Fall einer Anforderungs-Antwort-basierten Datenübertragung, gemäß der die Positionsmesseinrichtung 10 jeweils auf Anforderung seitens der Verarbeitungseinheit 20 Daten mit hoher, erster Priorität, insbesondere in Form von Positionsmesswerten, an die Verarbeitungseinheit 20 sendet.

Dementsprechend ist in Figur 2 ein Anforderungsbefehl REQ dargestellt, der zur Anforderung erster Daten (mit hoher Priorität) von der Verarbeitungseinheit 20 an die Positionsmesseinrichtung 10 gesandt wird. Hierdurch wird ein Zyklus der Datenübertragung eingeleitet, in welchem die Positionsmesseinrichtung zunächst erste Daten mit hoher Priorität HPF, also beispielsweise Positionsmesswerte, an die Verarbeitungseinheit 20 sendet. Auf der Grundlage dieser Daten kann beispielsweise eine hochdynamische Regelung einer Werkzeugmaschine erfolgen. Die zu übertragenden ersten Daten HPF können dabei in einem Datenrahmen ("High Priority Frame") übertragen werden.

Auf die hochprioren ersten Daten folgend können sodann, zumindest in einem Teil der Zyklen, weitere, zweite Daten mit Zusatzinformationen niedrigerer Priorität LPF0, ..., LPFn-1 von der Positionsmesseinrichtung 10 an die Verarbeitungseinheit 20 übertragen werden. Diese zweiten Daten niedrigerer Priorität kann einen sogenannten Kopf LPH ("Low Priority Header") vorangestellt sein, der Informationen über die nachfolgenden niederprioren Zusatzinformationen enthält und an welchen sich die Daten mit den niederprioren Zusatzinformationen anschließen.

Beispiele für Informationen, die in dem Kopfteil LPH der zweiten Daten enthalten sein können, sind Statusmeldungen über den Inhalt der nachfolgenden Zusatzinformationen, Angaben über die Anzahl von Rahmen ("Low Priority Frames") mit Daten zweiter Priorität, die als Zusatzinformationen übertragen werden sollen, sowie eine Kennung. Mittels der Kennung kann insbesondere angegeben werden, welche Art von Zusatzinformationen mit den nachfolgenden zweiten Daten übertragen werden soll. Bei der Kennung kann es sich z.B. um ein Datenwort mit der Datenmenge 1 Byte handeln, so dass sich 256 unterschiedliche Zusatzinformationen unterscheiden lassen.

Die Kennung kann aber auch jeweils in den nach dem Kopfteil LPH zu übertragenden Zusatzinformationen in Form zweiter Daten LPF0, ..., LPFn-1, insbesondere in jedem der entsprechenden Rahmen ("Low Priority Frames"/LPF), enthalten sein und den Inhalt des jeweiligen Rahmens bezeichnen. Eine Folgeelektronik kann so den Inhalt der Rahmen auch dann korrekt zuordnen, wenn die aktuell abgearbeitete Sendeliste dort nicht bekannt ist, bzw. sie kann überprüfen, ob die tatsächlich erwarteten zweiten Daten eintreffen.

Die nach dem Kopfteil LPH zu übertragenden Zusatzinformationen können dabei durch zweite Daten LPF0, ..., LPFn-1 in einem oder mehreren Datenrahmen ("Low Priority Frames") gebildet werden. Hierbei kann es sich beispielsweise um Sensordaten, wie Temperaturmesswerte, Geschwindigkeits- oder Beschleunigungswerte, oder um Zustandsinformationen bezüglich der Positionsmesseinrichtung, wie z. B. Diagnoseinformationen, Warnhinweise, Fehlermeldungen und Alarmsignale, oder auch um Speicherinhalte handeln.

Zusammenfassend kann also zumindest in einem Teil der Zyklen der Datenübertragung (jeweils eingeleitet durch einen Anforderungsbefehl REQ für hochpriore erste Daten) zusätzlich zu den hochprioren ersten Daten HPF eine Folge niederpriorer zweiter Daten LPF0, ..., LPFn-1 von der Positionsmesseinrichtung 10 zur Verarbeitungseinheit 20 übertragen werden. Eine Folge niederpriorer zweiter Daten LPF0, ..., LPFn-1 umfasst dabei vorliegend eine Mehrzahl niederpriorer Rahmen ("Low Priority Frames"), in denen jeweils eine Anzahl der zu übertragenden zweiten Daten enthalten ist.

Dabei können beispielsweise jeweils zweite Daten einer bestimmten Art, wie etwa Temperaturmesswerte, Beschleunigungswerte, Geschwindigkeitswerte, Diagnoseinformationen, Warnhinweise, Speicherinhalte usw., genau einem der Rahmen zugeordnet sein. Alternativ ist aber auch möglich, dass Daten einer bestimmten Art über mehrere der Rahmen verteilt sind oder dass ein einzelner Datenrahmen Daten unterschiedlicher Art enthält, also etwa sowohl Temperaturmesswerte als auch Beschleunigungswerte in einem Datenrahmen zusammengefasst sind. Nachfolgend wird der Einfachheit halber davon ausgegangen, dass jeder Datenrahmen zweiten Daten einer bestimmten Art zugeordnet ist. So können etwa die mit LPF0 bezeichneten Daten einen ersten Datenrahmen bilden, der beispielsweise zur Übertragung von Temperaturmesswerten dient; und die mit LPF1 bezeichneten Daten bilden einen weiteren Rahmen, der zur Übertragung von Beschleunigungswerten dient, usw.

Diesen zweiten Daten LPF0, ..., LPFn-1 ist im Ausführungsbeispiel jeweils noch ein Kopfteil LPH der vorstehend beschriebenen Art vorangestellt.

Um hierbei aufseiten der Positionsmesseinrichtung 10 festlegen zu können, welche zweiten Daten niederer Priorität jeweils einzelnen Zyklen der Datenübertragung zur Verarbeitungseinheit 20 zugeordnet werden sollen, sind in der Positionsmesseinrichtung Sendelisten abgelegt (gespeichert), in denen eine Mehrzahl unterschiedlicher Folgen zweiter Daten definiert ist, die jeweils in einem Zyklus (zusammen mit ersten Daten höherer Priorität) zur Verarbeitungseinheit übertragen werden sollen. Die Sendelisten geben dabei ferner an, in welcher Reihenfolge die einzelnen Folgen zweiter Daten jeweils einem Zyklus der Datenübertragung zuzuordnen sind.

Die Sendelisten, z.B. in Form von Datenblöcken, enthalten dabei nicht die zu übertragenden Daten selbst, die ja erst im Betrieb der Positionsmesseinrichtung 10 generiert werden, sondern geben an, welche Art(en) zweiter Daten den einzelnen Zyklen der Datenübertragung zuzuordnen ist.

Dies wird nachfolgend anhand Figur 3 näher beschrieben werden, wo eine Sendeliste jeweils durch einen Datenblock repräsentiert ist.

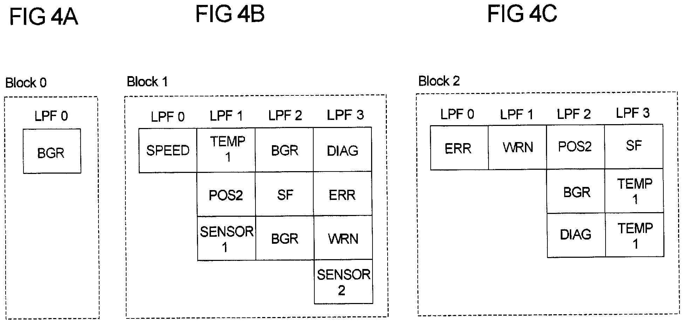

Die in Figur 3 gezeigten Sendelisten in Form von Datenblöcken (Block 0, Block 1, ..., Block k-1) weisen jeweils eine Mehrzahl entlang einer ersten Richtung (x-Richtung) erstreckter und quer (senkrecht) zu dieser Richtung (entlang der y-Richtung) übereinander angeordneter Zeilen 0, 1, 2, ..., m-1 auf, die jeweils eine Folge zweiter Daten der Länge n definieren. Mit anderen Worten ausgedrückt, gibt jede der m Zeilen einer jeweiligen Sendeliste bzw. eines jeweiligen Datenblockes an, welche Art zweiter Daten in einem jeweiligen Zyklus von der Positionsmesseinrichtung 10 zur Verarbeitungseinheit 20 übertragen werden soll. Jede Folge zweiter Daten umfasst dabei n Rahmen ("Low Priority Frames"), wobei vorliegend beispielhaft jeder dieser Rahmen zweite Daten einer bestimmten Art enthalten soll, wie nachfolgend anhand der Figuren 4A bis 4C noch näher erläutert werden wird.

Wird etwa eine der in Figur 3 dargestellten Sendelisten in Form je eines Datenblockes (Block 0, Block 1, ..., Block k-1) im Betrieb der Positionsmesseinrichtung 10 abgearbeitet, so wird einem ersten Zyklus der Datenübertragung von der Positionsmesseinrichtung 10 zur Verarbeitungseinheit 20 eine Folge zweiter Daten zugeordnet, die durch die Zeile "0" des entsprechenden Blockes definiert ist und die für n Datenrahmen jeweils die Art niederpriorer, zweiter Daten angibt, die im entsprechenden Zyklus von der Positionsmesseinrichtung 10 zur Verarbeitungseinheit 20 übertragen werden sollen.

Im nächsten Zyklus der Datenübertragung wird dann die in Zeile "1" des entsprechenden Datenblockes definierte Folge zweiter Daten übertragen werden, usw. bis schließlich die Zeile "m" des Datenblocks erreicht ist. Anschließend kann zu einer anderen Sendeliste in Form eines anderen Datenblockes gewechselt werden oder es wird derselbe Datenblock erneut beginnend mit der ersten Zeile "0" abgearbeitet.

Durch Festlegung der Sendelisten in Form von Datenblöcken, die in der Positionsmesseinrichtung hinterlegt werden, kann ein Nutzer somit bestimmen, welche Art(en) niederpriorer zweiter Daten in einem jeweiligen Zyklus der Datenübertragung von der Positionsmesseinrichtung 10 zur Verarbeitungseinheit 20 übertragen werden soll(en), und dabei insbesondere auch festlegen, in welcher Reihenfolge unterschiedliche Folgen zweiter Daten jeweils einzelnen Zyklen der Datenübertragung zugeordnet werden.

Dabei kann die Belegung der einzelnen Zeilen einer Sendeliste bzw. eines Datenblockes mit bestimmten Daten zweiter Art von Datenblock zu Datenblock in vielfacher Weise variieren, wie ebenfalls nachfolgend anhand der Figuren 4A bis 4C noch näher erläutert werden wird.

Dies ermöglicht - je nach Erforderlichkeit - die bereits erwähnte Mitwirkung der Verarbeitungseinheit 20 bei der Festlegung der in einzelnen Zyklen der Datenübertragung zu übertragenden niederprioren zweiten Daten. So kann etwa vorgesehen sein, dass durch bestimmte Befehle seitens der Verarbeitungseinheit 20 eine andere Sendeliste bzw. ein anderer Block auswählbar ist, die bzw. der sodann jeweils die aktuell in den einzelnen Zyklen zu übertragenden zweiten, niederprioren Daten festlegt.

In den Figuren 4A bis 4C ist für drei Datenblöcke (Block 0, Block 1, Block 2) jeweils exemplarisch angegeben, wie die Sendelisten bzw. Datenblöcke konkret ausgestaltet sein können.

Der in Figur 4A dargestellte Datenblock 0 umfasst als Sendeliste lediglich einen Eintrag in Form eines Rahmens niederpriorer, zweiter Daten LPF0, welcher festlegt, dass hier stets zweite Daten BGR einer einzigen, ganz bestimmten Art in einem jeweiligen Zyklus übertragen werden, solange bei der Datenübertragung von der Positionsmesseinrichtung 10 zur Verarbeitungseinheit 20 die durch den Datenblock 0 repräsentierte Sendeliste abgearbeitet wird. Hierbei kann es sich beispielsweise um einen durch den Messgeräte-Hersteller fest vorgegebenen Datenblock handeln, welcher während der Initialisierungsphase verwendet wird, in der ein Benutzer die Inhalte der anderen (nutzerseitig definierbaren) Sendelisten in Form von Datenblöcken in den Speicher der Positionsmesseinrichtung schreibt. Dementsprechend können allgemein sowohl vom Hersteller der Positionsmesseinrichtung fest vorgegebene als auch durch den jeweiligen Nutzer frei definierbare Sendelisten in Form von Datenblöcken in dem Speicher der Positionsmesseinrichtung abgelegt werden. Bei den hier beispielhaft genannten zweiten Daten BGR handelt es sich um Antwortdaten eines langsamen Hintergrundkanals ("Background-Daten"), welcher zum Beispiel das Lesen eines Messgerätespeichers während des Messbetriebes erlaubt.

Weiterhin kann eine jeweilige Sendeliste bzw. ein jeweiliger Datenblock grundsätzlich flüchtig oder nicht-flüchtig in der Positionsmesseinrichtung 10 hinterlegt sein. Dementsprechend sind in der Positionsmesseinrichtung 10 die erforderlichen flüchtigen und/oder nicht-flüchtigen Speicher (RAM bzw. ROM, EEPROM, ...) vorgesehen.

Insgesamt ermöglicht die Erstellbarkeit von Sendelisten bzw. Datenblöcken einem Nutzer eine weitgehende Freiheit bei der Festlegung niederpriorer, zweiter Daten, die während des Betriebs der Positionsmesseinrichtung in einer bestimmten Reihenfolge und verteilt über unterschiedliche Zyklen der Datenübertragung von der Positionsmesseinrichtung 2 zur Verarbeitungseinheit 20 übertragen werden können (ohne dass hierzu die Übermittlung von Befehlen seitens des Verarbeitungseinheit 20 notwendig wäre).

Figur 4B zeigt einen Datenblock 1 mit einer ersten Datenfolge (in Zeile "0"), welche vier Datenrahmen mit niederprioren, zweiten Daten LPF0, LPF1, LPF2 und LPF3 umfasst. Hiervon dienen die Daten des ersten Rahmens zur Darstellung von Geschwindigkeitswerten (SPEED), die Daten des zweiten Rahmens zur Darstellung von Temperaturmesswerten (TEMP), die Daten des dritten Rahmens zur Darstellung von Background-Daten (BGR) und die Daten des vierten Rahmens zur Darstellung von Diagnoseinformationen.

Eine Besonderheit der in Figur 4B dargestellten Sendeliste in Form des Datenblockes 1 besteht darin, dass jede der insgesamt vier Datenfolgen, welche durch die vier Zeilen "0, 1, 2, 3" des Datenblocks 1 definiert werden, jeweils mit einem Rahmen zweiter Daten LPF0 beginnt, der zur Angabe von Geschwindigkeitswerten ("SPEED") dienen soll. Zur Minimierung des Speicherbedarfes für die Sendeliste bzw. den Datenblock ist dabei lediglich in der ersten Datenfolge (aus Zeile "0" des Datenblockes 1) der entsprechende Rahmen mit besagten zweiten Daten in Form von Geschwindigkeitswerten ("SPEED") ausdrücklich definiert. In den drei weiteren Folgen zweiter Daten (in den Zeilen "1", "2" und "3" des Datenblocks 1) bleibt die Stelle, an der ein erster Rahmen mit zweiten Daten definiert werden müsste, jeweils frei. Denn dort soll bei Abarbeitung des Datenblockes stets der für die erste Datenfolge definierte Rahmen mit zweiten Daten LPF0, welcher die Übertragung aktueller Geschwindigkeitswert ("SPEED") auslöst, wiederholt werden (dann mit den jeweils aktuellen Geschwindigkeitswerten, die sich von Datenfolge zu Datenfolge ändern können).

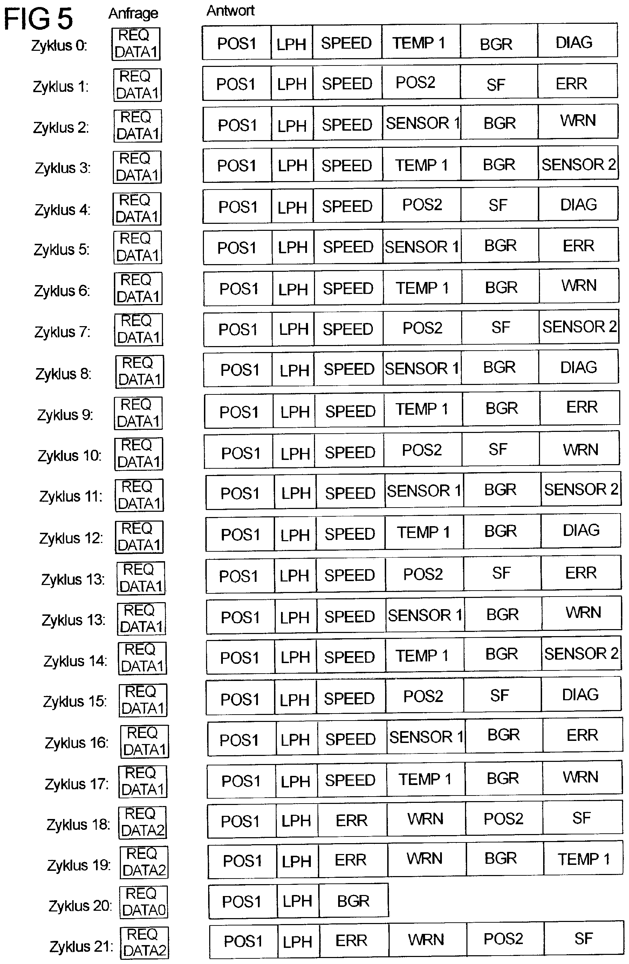

Insgesamt wird jede der vier Spalten des Datenblocks 1 aus Figur 4B bei dessen Abarbeitung im Betrieb der Positionsmesseinrichtung mit einer Periode wiederholt, die der Länge der entsprechenden Spalte entspricht. Gleiches gilt für den in Figur 4C dargestellten Datenblock 2. Dies wird zusätzlich verdeutlicht anhand Figur 5, wo eine beispielhafte Abarbeitung von Sendelisten in Form der Datenblöcke 0, 1 und 2 aus den Figuren 4A - 4C dargestellt ist. In den ersten 18 Zyklen, nämlich vom Zyklus 0 bis zum Zyklus 17, wird jeweils der Datenblock 1 abgearbeitet, und zwar im Ausführungsbeispiel in der Weise, dass in jedem Zyklus nach der Übertragung von Positionsdaten POS1 (ausgelöst durch einen Anforderungsbefehl REQ DATA1 seitens der Verarbeitungseinheit 20), welche hochpriore erste Daten darstellen, anschließend niederpriore zweite Daten übertragen werden. Dies geschieht in Form von Folgen zweiter Daten, die jeweils einer der Zeilen des Datenblockes 1 aus Figur 4B entsprechen, wobei die insgesamt vier Zeilen des Datenblockes jeweils nacheinander aufeinander folgenden Datenzyklen zugeordnet werden. Der Datenblock 1 aus Figur 4B wird dabei gemäß Figur 5 so lange abgearbeitet, bis zur Abarbeitung des Datenblockes 2 aus Figur 4C gewechselt wird. Dies kann einerseits durch entsprechende Konfiguration der Sendelisten vorgegeben sein oder andererseits durch einen entsprechenden Anforderungsbefehl der Verarbeitungseinheit 20 ausgelöst sein. Anschließend wird in Zyklus 20 einmal der Datenblock 0 abgearbeitet, woraufhin das System wieder zur Abarbeitung des Datenblockes 2 zurückkehrt.

Ein durch die Positionsmesseinrichtung selbst veranlasster Wechsel von einer Sendeliste zur anderen bzw. von einem Datenblock zum anderen kann ereignisgesteuert implementiert sein, zum Beispiel mit dem Überschreiten einer bestimmten Temperatur in der Messumgebung. Hierbei könnten etwa, wenn in der Messeinrichtung kritische Temperaturwerte erreicht werden, durch die Umschaltung auf eine andere Sendeliste bzw. einen anderen Datenblock zusätzlich Diagnose- oder Warnmeldungen ausgegeben werden.

Regelmäßig wird es zweckmäßig sein, dass die Auswahl der jeweils abzuarbeitenden Sendeliste bzw. des entsprechenden Datenblockes durch die Verarbeitungseinheit 20 erfolgt, welche hierzu einen entsprechenden Befehl an die Positionsmesseinrichtung 10 sendet. Dieser kann ein Bestandteil eines Positionsanforderungsbefehls (zum Beispiel REQ DATA0, REQ DATA1 oder REQ DATA2) sein, mit welchem die Verarbeitungseinheit 20 die Übertragung von Messwerten (zum Beispiel POS1) anfordert oder auch ein Zusatz zu einem solchen Anforderungsbefehl. Alternativ kann aber auch ein spezieller, von den Positionsanforderungsbefehlen separater Befehl (Umschalt- bzw. Auswahlbefehl) vorgesehen sein, welcher von der Verarbeitungseinheit 20 an die Positionsmesseinrichtung 10 übertragen wird, um die Auswahl der aktuell abzuarbeitenden Sendeliste vorzunehmen. Dies gilt entsprechend in einen zyklischen Betrieb, nach dessen Aktivierung die Positionsmesseinrichtung 10 fortlaufend Messwerte zur Verarbeitungseinheit 20 übersendet, ohne dass den Messwerten jeweils ein eigener Anforderungsbefehl zugeordnet wäre. Hier kann die abzuarbeitende Sendeliste im Zusammenhang mit dem Befehl festgelegt werden, welcher den zyklischen Betrieb aktiviert.

In der Darstellung gemäß Figur 5 wird die periodische bzw. rollierende Wiederholung der einzelnen Zeilen der Datenblöcke 0, 1 und 2 (mit einer ihrer Länge in y-Richtung entsprechenden Periode) sehr deutlich. Durch die periodische bzw. rollierende Wiederholung unterschiedlich langer, einzelner Zeilen der Sendelisten bzw. Datenblöcke, wie anhand der Figuren 4A bis 4C erläutert, lässt sich der Speicherbedarf bei der Hinterlegung der Sendelisten bzw. Datenblöcke in der Positionsmesseinrichtung reduzieren, weil es nicht erforderlich ist, jede in einem jeweiligen Datenblock zu definierende Folge zweiter Daten vollständig in einer Zeile des Datenblocks zu hinterlegen, wie sich insbesondere aus einer Zusammenschau der Figuren 4B, 4C und 5 ergibt.

Zusammenfassend ist danach vorgesehen, dass mindestens eine Art zweiter Daten, die gemäß einer Sendeliste (Block 0, Block 1, Block 2, ...) als Bestandteil unterschiedlicher Folgen zweiter Daten jeweils einzelnen Zyklen der Datenübertragung zugeordnet werden soll, innerhalb der Sendeliste (Block 0, Block 1, Block 2, ...) nur in einem Teil jener unterschiedlichen Folgen zweiter Daten definiert ist, und dass die Übertragung zusammen mit dem anderen Teil jener unterschiedlichen Folgen zweiter Daten durch periodische Wiederholung der besagten Art zweiter Daten (TEMP, SPEED, DIAG, ERR, WRN) bei der Abarbeitung der entsprechenden Sendeliste (Block 0, Block 1, Block 2, ...) erreicht wird.

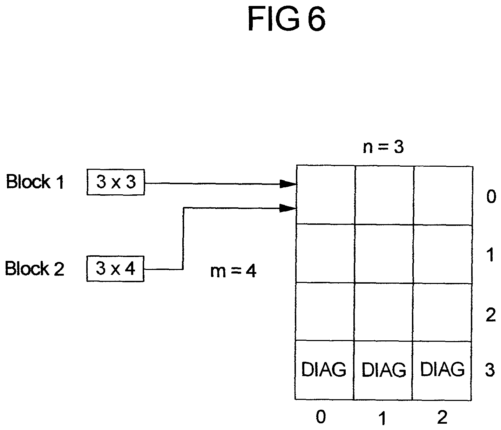

Eine weitere Möglichkeit für die Speicher-optimierte Ablage der Sendelisten wird anhand Figur 6 deutlich und beruht darauf, dass regelmäßig unterschiedliche Datenblöcke in den darin definierten Folgen zweiter Daten teilweise übereinstimmen, so dass es nicht erforderlich ist, jede einzelne Liste bzw. jeden Datenblock vollständig in einem eigenständigen Speicherbereich der Positionsmesseinrichtung abzulegen. Vielmehr kann es z.B. genügen, nur ein Teil der Datenblöcke vollständig in der Positionsmesseinrichtung abzulegen und hinsichtlich weiterer Datenblöcke lediglich die Unterschiede zu den vollständig abgelegten Datenblöcken anzugeben. Dies ist in Figur 6 an einem konkreten Beispiel für zwei Datenblöcke dargestellt.

Beispielhaft sei hier ein Fall betrachtet, in dem ein Nutzer im Betrieb der Positionsmesseinrichtung zusätzliche Diagnoseinformationen von der Positionsmesseinrichtung erhalten möchte, im Übrigen aber weiterhin diejenigen zweiten Daten an die Verarbeitungseinheit übertragen werden sollen, welche bei Abarbeitung der aktuellen Sendeliste, z. B. in Form des Datenblockes 1, von der Positionsmesseinrichtung an die Verarbeitungseinheit gesandt werden. In diesem Fall kann als Sendeliste ein neuer Datenblock 2 genutzt werden, welcher zum einen alle Einträge des aktuell genutzten Datenblockes 1 enthält und darüber hinaus z. B. eine in einer zusätzlichen Zeile "3" des Datenblockes definierten Datenfolge mit Diagnoseinformationen DIAG, wie in Figur 6 gezeigt.

Es ist dann nicht erforderlich, die beiden Sendelisten gemäß Datenblock 1 und Datenblock 2 jeweils separat im Speicher der Positionsmesseinrichtung abzulegen. Vielmehr genügt es, wie in Figur 6 dargestellt, im Speicher einerseits den gemeinsamen Inhalt beider Sendelisten gemäß Datenblock 1 und Datenblock 2 abzulegen, sowie zusätzlich, vorliegend in einer zusätzlichen, vierten Zeile, den zusätzlichen Inhalt der umfangreicheren Sendeliste gemäß Datenblock 2.

Indem jeder der beiden Datenblöcke 1, 2 jeweils mittels eines Zeigers auf den Start seiner Konfiguration weist und eine Angabe über den Umfang des ihm zugeordneten Konfigurationsspeichers, z. B. 3 x 3 im Fall des Datenblockes 1 bzw. 3 x 4 im Fall des Datenblockes 2 enthält, können so Speicherplatz-sparend mehrere Sendelisten in Form von Datenblöcken im Speicher einer Positionsmesseinrichtung hinterlegt werden.

Konkret im Ausführungsbeispiel gemäß Figur 6 weisen die beiden Datenblöcke 1 und 2 mit ihrem Zeiger auf dieselbe Adresse des Speichers; und eine Differenzierung der beiden Blöcke erfolgt durch Angabe des Umfangs des jeweils belegten Speicherbereiches.

Allgemeiner ausgedrückt ist vorgesehen, dass mindestens zwei Sendelisten (Block 1, Block 2), welche teilweise übereinstimmende Inhalte aufweisen, derart in der Positionsmesseinrichtung 10 gespeichert sind, dass die Sendelisten (Block 1, Block 2) für übereinstimmende Inhalte denselben Speicherbereich in der Positionsmesseinrichtung 10 nutzen, wobei eine Differenzierung der beiden Sendelisten (Block 1, Block 2) durch Identifizierung der von der jeweiligen Sendeliste (Block 1, Block 2) insgesamt belegten Bereiche des Speichers erfolgen kann.

Insgesamt ermöglicht das anhand der Figuren 1 bis 6 beschriebene Vorgehen, von Zyklus zu Zyklus unterschiedliche Zusatzinformationen in Form niederpriorer zweiter Daten automatisiert von der Positionsmesseinrichtung 10 an die Verarbeitungseinheit 20 zu senden, ohne dass dies der Positionsmesseinrichtung 10 durch eine separate Ansteuerung vorgegeben werden müsste. Insbesondere kann ein jeweiliger Nutzer durch Definition von Sendelisten, z. B. in Form von Datenblöcken, die jeweils als Zusatzinformation zu übertragenden Inhalte selbst definieren. Gleichzeitig ist es aber auch möglich, (zyklus-genau) die Art der zu übertragenden Zusatzinformationen in Form niederpriorer zweiter Daten (durch Übersendung entsprechender Befehle seitens der Auswerteeinheit) zu ändern, z. B. um auf Ereignisse wie Fehlermeldungen oder Warnhinweise reagieren zu können. Weiterhin ist eine speicher-optimierte Ablage der Sendelisten in der Positionsmesseinrichtung realisiert.

## Patentansprüche

1. Verfahren zum Übertragen von Daten zwischen einer Positionsmesseinrichtung (10) und einer zugeordneten Verarbeitungseinheit (20), bei dem als erste Daten bezeichnete Daten einer ersten Priorität in aufeinander folgenden Zyklen von der Positionsmesseinrichtung (10) zur Verarbeitungseinheit (20) übertragen werden und bei dem zumindest in einem Teil der Zyklen zusätzlich zu den ersten Daten als zweite Daten bezeichnete Daten einer zweiten, niedrigeren Priorität von der Positionsmesseinrichtung (10) zur Verarbeitungseinheit (20) übertragen werden, wobei die Art der in einem jeweiligen Zyklus übertragenen zweiten Daten variiert, wobei zur Einleitung eines Zyklus der Datenübertragung jeweils erste Daten durch einen Anforderungsbefehl (REQ; REQ DATA0, REQ DATA1, REQ DATA2) seitens der Verarbeitungseinheit (20) angefordert werden und wobei in der Positionsmesseinrichtung (10) Informationen abgelegt sind, mittels derer einzelnen Zyklen der Datenübertragung jeweils mindestens eine bestimmte Art zu übertragender zweiter Daten zugeordnet wird, derart, dass eine Zuordnung zweiter Daten zu den einzelnen Zyklen ohne Mitwirkung der Verarbeitungseinheit (20) vorgenommen werden kann,
**dadurch gekennzeichnet,**
**dass** die Folgen zweiter Daten in der Positionsmesseinrichtung (10) zu einer Mehrzahl in einem Speicher der Positionsmesseinrichtung abgelegten Sendelisten (Block 0, Block 1, Block 2, ..., Block k-1) in Form unterschiedlicher Datenblöcke zusammengefasst sind, die Mehrzahl Sendelisten (Block 0, Block 1, Block 2, ..., Block k-1) jeweils mindestens eine Folge zweiter Daten definieren und von der Mehrzahl Sendelisten zumindest ein Teil mehrere Folgen zweiter Daten definiert, und dass den einzelnen Zyklen in einem gegebenen Zeitabschnitt einer Datenübertragung durch die Positionsmesseinrichtung (10) jeweils Folgen zweiter Daten gemäß einer durch eine der Sendelisten (Block 0, Block 1, Block 2, ..., Block k-1) festgelegten Reihenfolge zugeordnet werden und dass die jeweilige Sendeliste (Block 0, Block 1, Block 2, ..., Block k-1), aus welcher einzelnen Zyklen der Datenübertragung Folgen zweiter Daten zugeordnet werden, durch einen von der Verarbeitungseinheit (20) an die Positionsmesseinrichtung (10) übertragenen Anforderungsbefehl (REQ; REQ DATA0, REQ DATA1, REQ DATA2) ausgewählt wird.

2. Verfahren nach Anspruch 1, **dadurch gekennzeichnet, dass** als erste Daten Positions-, Geschwindigkeits- und/oder Beschleunigungsmesswerte übertragen werden.

3. Verfahren nach einem der vorhergehenden Ansprüche, **dadurch gekennzeichnet, dass** sich zweite Daten unterschiedlicher Art hinsichtlich einer physikalischen Größe (TEMP, SPEED), die sie repräsentieren, und/oder hinsichtlich eines Zustandes (DIAG, ERR, WRN) der Positionsmesseinrichtung (10), auf den sie sich beziehen, unterscheiden.

4. Verfahren nach einem der vorhergehenden Ansprüche, **dadurch gekennzeichnet, dass**, ausgelöst durch einen jeweiligen Anforderungsbefehl (REQ; REQ DATA0, REQ DATA1, REQ DATA2) oder einen separaten Befehl der Verarbeitungseinheit (10), anhand einer dem Anforderungsbefehl (REQ; REQ DATA0, REQ DATA1, REQ DATA2) zugeordneten Sendeliste (Block 0, Block 1, Block 2, ..., Block k-1) festgelegt wird, ob und welche zweite Daten in dem durch den Anforderungsbefehl (REQ; REQ DATA0, REQ DATA1, REQ DATA2) eingeleiteten Zyklus übertragen werden.

5. Verfahren nach einem der vorhergehenden Ansprüche, **dadurch gekennzeichnet, dass** die zweiten Daten rahmenweise übertragen werden und dass die einzelnen Rahmen zweiter Daten (LPF0, LPF1, LPF2, LPF3) jeweils eine Kennung aufweisen, die den Inhalte des jeweiligen Datenrahmens bezeichnet.

6. Positionsmesseinrichtung, von der im Betrieb als erste Daten bezeichnete Daten einer ersten Priorität in aufeinanderfolgenden Zyklen an eine Verarbeitungseinheit (20) sendbar sind und von der zumindest in einem Teil der Zyklen zusätzlich zu den ersten Daten als zweite Daten bezeichnete Daten einer zweiten, niedrigeren Priorität an die Verarbeitungseinheit (20) sendbar sind, wobei die Art der in einem jeweiligen Zyklus übertragenen zweiten Daten variierbar ist und wobei zur Einleitung eines Zyklus der Datenübertragung jeweils erste Daten durch einen Anforderungsbefehl (REQ; REQ DATA0, REQ DATA1, REQ DATA2) von der Verarbeitungseinheit (20) anzufordern sind und wobei in der Positionsmesseinrichtung (10) Informationen abgelegt sind, mittels derer einzelnen Zyklen der Datenübertragung jeweils mindestens eine bestimmte Art zu übertragender zweiter Daten zuordenbar ist, derart, dass eine Zuordnung zweiter Daten zu den einzelnen Zyklen ohne Mitwirkung der Verarbeitungseinheit (20) vornehmbar ist
**dadurch gekennzeichnet,**
**dass** die Folgen zweiter Daten in der Positionsmesseinrichtung (10) zu einer Mehrzahl in einem Speicher der Positionsmesseinrichtung abgelegten Sendelisten (Block 0, Block 1, Block 2, ..., Block k-1) in Form unterschiedlicher Datenblöcke zusammengefasst sind, die jeweils mindestens eine Folge zweiter Daten definieren und von denen zumindest ein Teil mehrere Folgen zweiter Daten definiert, und dass den einzelnen Zyklen in einem gegebenen Zeitabschnitt einer Datenübertragung durch die Positionsmesseinrichtung (10) jeweils Folgen zweiter Daten gemäß einer durch eine der Sendelisten (Block 0, Block 1, Block 2, ..., Block k-1) festgelegten Reihenfolge zuordenbar sind und dass die jeweilige Sendeliste (Block 0, Block 1, Block 2, ..., Block k-1), aus welcher einzelnen Zyklen der Datenübertragung Folgen zweiter Daten zugeordnet werden, durch einen von der Verarbeitungseinheit (20) an die Positionsmesseinrichtung (10) übertragenen Anforderungsbefehl (REQ; REQ DATA0, REQ DATA1, REQ DATA2) auswählbar ist.

7. Positionsmesseinrichtung nach Anspruch 6, **dadurch gekennzeichnet, dass** die Positionsmesseinrichtung (10) zur Generierung von Positions-, Geschwindigkeits und/oder Beschleunigungsmesswerten ausgebildet ist, die als erste Daten an eine Verarbeitungseinheit (20) übertragbar sind.

## Claims

1. Method for transmitting data between a position measuring device (10) and an associated processing unit (20), in which data of a first priority, referred to as first data, are transmitted in successive cycles from the position measuring device (10) to the processing unit (20), and in which, at least in some of the cycles, data of a second, lower priority, referred to as second data, are transmitted from the position measuring device (10) to the processing unit (20) in addition to the first data, the type of second data transmitted in a respective cycle varying, first data respectively being requested by the processing unit (20) by means of a request command (REQ; REQ DATA0, REQ DATA1, REQ DATA2) in order to initiate a data transmission cycle, and the position measuring device (10) storing information which is used to assign in each case at least one particular type of second data to be transmitted to individual data transmission cycles in such a manner that second data can be assigned to the individual cycles without the involvement of the processing unit (20),
**characterized in that**
the sequences of second data are combined in the position measuring device (10) to form a plurality of transmission lists (block 0, block 1, block 2, ..., block k-1) in the form of different data blocks which are stored in a memory of the position measuring device, the plurality of transmission lists (block 0, block 1, block 2, ..., block k-1) each define at least one sequence of second data, and, of the plurality of transmission lists, at least some define a plurality of sequences of second data, and **in that** the position measuring device (10) respectively assigns sequences of second data to the individual cycles in a given data transmission period according to an order stipulated by one of the transmission lists (block 0, block 1, block 2, ..., block k-1), and **in that** the respective transmission list (block 0, block 1, block 2, ..., block k-1), from which sequences of second data are assigned to individual data transmission cycles, is selected by means of a request command (REQ; REQ DATA0, REQ DATA1, REQ DATA2) transmitted from the processing unit (20) to the position measuring device (10).

2. Method according to Claim 1, **characterized in that** position, speed and/or acceleration measured values are transmitted as first data.

3. Method according to one of the preceding claims, **Characterized in that** second data of different types differ in terms of a physical variable (TEMP, SPEED) represented by said data and/or in terms of a state (DIAG, ERR, WRN) of the position measuring device (10) to which said data relate.

4. Method according to one of the preceding claims, **characterized in that,** when triggered by a respective request command (REQ; REQ DATA0, REQ DATA1, REQ DATA2) or a separate command from the processing unit (10), it is determined whether and which second data are transmitted in the cycle initiated by the request command (REQ; REQ DATA0, REQ DATA1, REQ DATA2) on the basis of a transmission list (block 0, block 1, block 2, ..., block k-1) assigned to the request command (REQ; REQ DATA0, REQ DATA1, REQ DATA2).

5. Method according to one of the preceding claims,
**characterized in that** the second data are transmitted in frames, and **in that** the individual frames of second data (LPF0, LPF1, LPF2, LPF3) each have an identifier which indicates the contents of the respective data frame.

6. Position measuring device which, during operation, can transmit data of a first priority, referred to as first data, in successive cycles to a processing unit (20) and which, at least in some of the cycles, can transmit data of a second, lower priority, referred to as second data, to the processing unit (20) in addition to the first data, the type of second data transmitted in a respective cycle being able to be varied, and first data respectively needing to be requested by the processing unit (20) by means of a request command (REQ; REQ DATA0, REQ DATA1, REQ DATA2) in order to initiate a data transmission cycle, and the position measuring device (10) storing information which can be used to assign in each case at least one particular type of second data to be transmitted to individual data transmission cycles in such a manner that second data can be assigned to the individual cycles without the involvement of the processing unit (20),
**characterized in that**
the sequences of second data are combined in the position measuring device (10) to form a plurality of transmission lists (block 0, block 1, block 2, ..., block k-1) in the form of different data blocks which are stored in a memory of the position measuring device, each define at least one sequence of second data and of which at least some define a plurality of sequences of second data, and **in that** the position measuring device (10) can respectively assign sequences of second data to the individual cycles in a given data transmission period according to an order stipulated by one of the transmission lists (block 0, block 1, block 2, ..., block k-1), and **in that** the respective transmission list (block 0, block 1, block 2, ..., block k-1), from which sequences of second data are assigned to individual data transmission cycles, can be selected by means of a request command (REQ; REQ DATA0, REQ DATA1, REQ DATA2) transmitted from the processing unit (20) to the position measuring device (10).

7. Position measuring device according to Claim 6,
**characterized in that** the position measuring device (10) is designed to generate position, speed and/or acceleration measured values which can be transmitted to a processing unit (20) as first data.

## Revendications

1. Procédé pour transmettre des données entre un dispositif de mesure de position (10) et une unité de traitement associée (20), dans lequel des données désignées comme étant des premières données ayant une première priorité sont transmises au cours de cycles consécutifs par le dispositif de mesure de position (10) à l'unité de traitement (20) et dans lequel, au cours d'au moins une partie des cycles, en plus des premières données, des données désignées comme étant des deuxièmes données ayant une deuxième priorité plus faible sont transmises par le dispositif de mesure de position (10) à l'unité de traitement (20), dans lequel le type des deuxièmes données transmises au cours d'un cycle respectif varie, dans lequel, pour l'introduction d'un cycle de la transmission des données, des premières données sont respectivement demandées par une instruction de demande (REQ ; REQ DATA0, REQ DATA1, REQ DATA2) du côté de l'unité de traitement (20) et dans lequel des informations sont stockées dans le dispositif de mesure de position (10), au moyen desquelles au moins un type déterminé de deuxièmes données à transmettre est respectivement associé à des cycles individuels de la transmission de données, de manière à ce qu'une association de deuxièmes données aux cycles individuels puisse être effectuée sans participation de l'unité de traitement (20),
**caractérisé en ce que** les séquences de deuxièmes données sont regroupées dans le dispositif de mesure de position (10) en une majorité de listes d'émission (bloc 0, bloc 1, bloc 2, ... , bloc k-1) stockées dans une mémoire du dispositif de mesure de position sous la forme de différents blocs de données, la majorité de listes d'émission (bloc 0, bloc 1, bloc 2, ..., bloc k-1) définissent respectivement au moins une séquence de deuxièmes données et au moins une partie de la majorité de listes d'émission définit plusieurs séquences de deuxièmes données, et **en ce que** des séquences de deuxièmes données sont respectivement associées aux cycles individuels au cours d'une période de temps donnée d'une transmission de données par le dispositif de mesure de position (10) conformément à un ordre établi par l'une des listes d'émission (bloc 0, bloc 1, bloc 2, ... bloc k-1), et **en ce que** la liste d'émission respective (bloc 0, bloc 1, bloc 2, ..., bloc k-1), à partir de laquelle des séquences de deuxièmes données sont associées à des cycles individuels de la transmission de données, est sélectionnée par une instruction de demande (REQ ; REQ DATA0, REQ DATA1, REQ DATA2) transmise par l'unité de traitement (20) au dispositif de mesure de position (10).

2. Procédé selon la revendication 1, **caractérisé en ce que** des valeurs de mesure de position, de vitesse et/ou d'accélération sont transmises en tant que premières données.

3. Procédé selon l'une quelconque des revendications précédentes, **caractérisé en ce que** des deuxièmes données de type différent diffèrent en ce qui concerne une grandeur physique (TEMP, SPEED) qu'elles représentent, et/ou en ce qui concerne un état (DIAG, ERR, WRN) du dispositif de mesure de position (10) auquel elles se réfèrent.

4. Procédé selon l'une quelconque des revendications précédentes, **caractérisé en ce qu'**il est établi, de manière déclenchée par un instruction de demande (REQ ; REQ DATA0, REQ DATA1, REQ DATA2) respective ou par une instruction séparée provenant de l'unité de traitement (10), sur la base d'une liste d'émission (bloc 0, bloc 1, bloc 2, ... , bloc k-1) associée à l'instruction de demande (REQ ; REQ DATA0, REQ DATA1, REQ DATA2), si des deuxièmes données, et lesquelles, sont transmises au cours du cycle introduit par l'instruction de demande (REQ ; REQ DATA0, REQ DATA1, REQ DATA2).

5. Procédé selon l'une quelconque des revendications précédentes, **caractérisé en ce que** les deuxièmes données sont transmises trame par trame et **en ce que** les trames individuelles de deuxièmes données (LPF0, LPF1, LPF2, LPF3) comportent respectivement un identifiant qui désigne les contenus de la trame de données respective.

6. Dispositif de mesure de position, permettant d'envoyer à une unité de traitement (20), lors du fonctionnement, des données désignées comme étant des premières données ayant une première priorité lors de cycles consécutifs et permettant d'envoyer à l'unité de traitement (20), au cours d'au moins une partie des cycles, en plus des premières données, des données désignées comme étant des deuxièmes données ayant une deuxième priorité plus faible, dans lequel le type des deuxièmes données transmises au cours d'un cycle respectif peut être amené à varier et dans lequel, pour l'introduction d'un cycle de la transmission de données, des premières données doivent être respectivement demandées par l'unité de traitement (20) par une instruction de demande (REQ ; REQ DATA0, REQ DATA1, REQ DATA2) et dans lequel des informations sont stockées dans le dispositif de mesure de position (10), au moyen desquelles au moins un type déterminé de deuxièmes données à transmettre peut respectivement être associé à des cycles individuels de la transmission de données, de manière à ce qu'une association de deuxièmes données aux cycles individuels puisse être effectuée sans participation de l'unité de traitement (20), **caractérisé en ce que** les séquences de deuxièmes données sont regroupées dans le dispositif de mesure de position (10) en une majorité de listes d'émission (bloc 0, bloc 1, bloc 2, ... , bloc k-1) stockées dans une mémoire du dispositif de mesure de position sous la forme de différents blocs de données, qui définissent respectivement au moins une séquence de deuxièmes données et dont au moins une partie définit plusieurs séquences de deuxièmes données, et **en ce que** des séquences de deuxièmes données peuvent respectivement être associées aux cycles individuels au cours d'une période de temps donnée d'une transmission de données par le dispositif de mesure de position (10) conformément à un ordre établi par l'une des listes d'émission (bloc 0, bloc 1, bloc 2, ... , bloc k-1), et **en ce que** la liste d'émission respective (10bloc 0, bloc 1, bloc 2, ..., bloc k-1) à partir de laquelle des séquences de deuxièmes données sont associées à des cycles individuels de la transmission de données, peut être sélectionnée par une instruction de demande (REQ ; REQ DATA0, REQ DATA1, REQ DATA2) transmise par l'unité de traitement (20) au dispositif de mesure de position (10).

7. Dispositif de mesure de position selon la revendication 6, **caractérisé en ce que** le dispositif de mesure de position (10) est conçu pour générer des valeurs de position, de vitesse et/ou d'accélération, qui peuvent être transmises en tant que premières données à une unité de traitement (20).
